Europäisches Patentamt

European Patent Office

Office européen des brevets

(19)

(11) EP 0 817 478 A1

## (12) EUROPEAN PATENT APPLICATION

(43) Date of publication:
07.01.1998 Bulletin 1998/02

(51) Int Cl.6: H04N 5/44

(21) Application number: 97401460.7

(22) Date of filing: 23.06.1997

(84) Designated Contracting States:
DE FR GB IT

(30) Priority: 28.06.1996 FR 9608054

(71) Applicant: THOMSON Multimedia
92648 Boulogne Cédex (FR)

(72) Inventor: Heimburger, Catherine
92648 Boulogne Cedex (FR)

(74) Representative: Ruellan-Lemonnier, Brigitte et al
THOMSON multimedia,
46 quai A. Le Gallo
92648 Boulogne Cédex (FR)

(54) **Process for interpolating frames for film mode compatibility**

(57) The invention relates to a process for interpolating frames of digital video data received in the form of frames at the frame frequency in film mode or in normal mode, including a frame storage, a motion estimation yielding motion vectors and an interpolation between the stored frame and a current frame, characterized in that in film mode storage is carried out at half the frequency of that in camera mode in such a way that only the second of the two input frames corresponding to the same film image is stored in the frame memory so as to be re-read twice in succession so as to be compared with the next two input frames so as to calculate the motion vectors.

Application to frame frequency conversion.

FIG.5

**Description**

The invention relates to a process for interpolating frames with frame frequency conversion from video signals in camera mode or in film mode and allowing a reduction in the jerkiness related to utilization of the film mode with interlaced scanning.

Frequency conversion utilizing motion compensation, for example the transfer from 50 Hz interlaced to 100 Hz interlaced, actually raises a particular problem when utilizing sequences in film mode.

Scanning in film mode is 25 Hz scanning in progressive mode (the transfer from 24 images per second to 25 Hz being done by artificially doubling one image every 24 images). In order to be transformed into the 50 Hz interlaced standard television format, the film image is split into two intermediate frames, which correspond to the same image - that is to say to the same instant - but which are displayed at two different instants. Viewing at 50 Hz interlaced therefore gives rise to a jerking effect on the objects in motion in the scene, since their motion is no longer reproduced faithfully but undergoes a kind of temporal splitting. This jerking effect persists after frame frequency conversion - at 75 Hz or 100 Hz, for example - if a conversion algorithm is used which employs just a single frame memory, even if the interpolation is motion compensated.

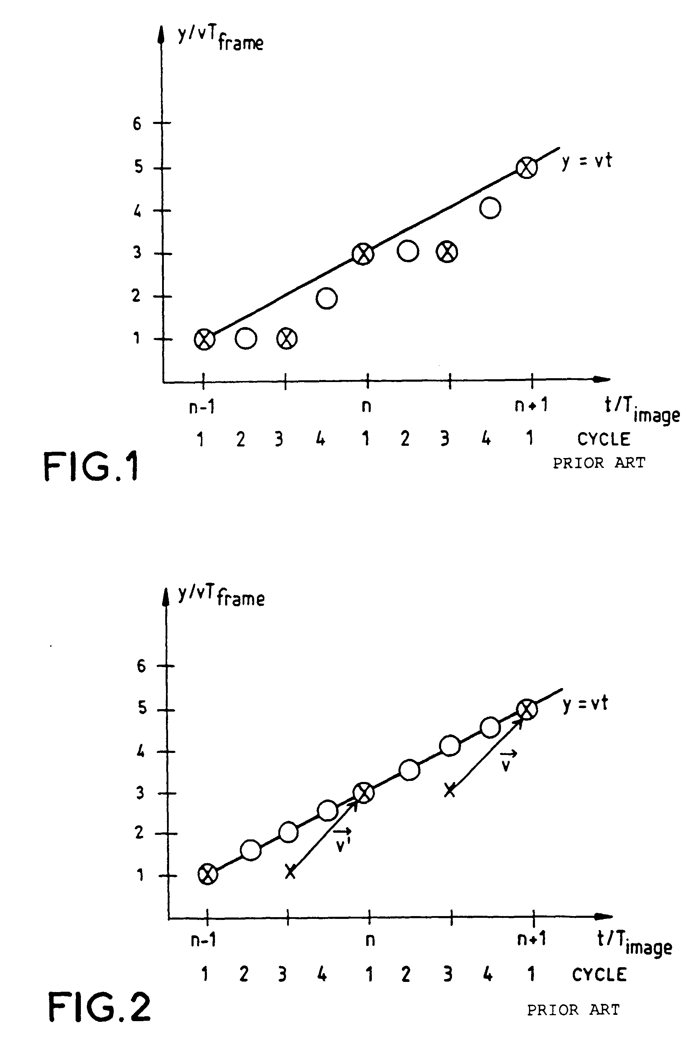

Figure 1 describes the alterations in a pixel belonging to an object having a vertical uniform rectilinear motion, in the case of a 50 Hz to 100 Hz frequency conversion, when the image sequence input is in film mode.

The abscissa axis is graduated in image numbers (n-1, n, n+1, ...), each number corresponding to an instant t divided by the image period T image. The ordinate axis corresponds to the vertical shift y of the pixel in the image divided by the product of the uniform rate of shift of the pixel and the frame period T frame.

The two frames of the same image input to the frequency converter are labelled 1 and 3, the intermediate frames reconstructed by the converter are labelled 2 and 4, this corresponding to four cycles at the output for a given image.

The input pixels represented by a cross originate from frames in film mode and are therefore positioned at the same place for two successive frames 1 and 3 of an image n corresponding to cycles 1 and 3. Frequency conversion generates two new frames 2 and 4 interleaved between these frames for the same image n. Motion estimation between two successive input frames 1 and 3 of an image, and then 3 of one image and 1 of the next image would give the pixels represented by a circle in Figure 1:

- between frames 1 and 3, the calculated motion vector is zero and the pixel of the intermediate frame has the same position as those corresponding to the neighbouring frames;
- between frames 3 and 1, the calculated motion vector V makes it possible to position the pixel of the intermediate frame at the distance $\frac{V}{2}$.

The jerking effect, that is to say the unevenness in the motion, gives rise here to "staircasing" appearing in the figure and generated by the input pixels replicated at output and by the interpolated pixels in respect of the reconstructed frames.

A known process for reducing jerkiness is described with the aid of figure 2. Motion estimation is carried out between frame 1 and 3 of an image (in fact the motion vector is zero) and between frame 3 of one image and frame 1 of the next image.

The motion vector V calculated between the input frame 3 of the image n and frame 1 of the next image n+1 is utilized here to position the pixels by interpolation in the output frames 3 and 4 of the current image n (here, the pixel of frame 3 is not replicated at output):

- The output pixel of frame 3 is shifted by a value $\frac{V}{2}$ with respect to the input pixel of this same frame.
- The output pixel of frame 4 is shifted by a value $\frac{3V}{4}$ with respect to the input pixel of frame 3.

The motion vector V' calculated between the input frame 3 of the previous image and frame 1 of the current image n is utilized to position the pixels in the output frames of the current image:

- The output pixel of frame 2 by shifting the input pixel of frame 1 by a value $\frac{V'}{4}$.
- The output pixel of frame 1 is shifted by a value zero with respect to the input pixel of this same frame (replicate pixel).

An extrapolation from the motion vector calculated from a frame of the previous image and a frame of the current image and two interpolations from the motion vector calculated from a frame of the current image and a frame of the next image are therefore carried out here.

The pixels at output are, as the figure shows, aligned, making this jerking effect disappear.

This process is however very expensive. The estimation of the motion vectors which it entails requires a large number of delay lines, especially if the hardware implementation constraint is imposed whereby the motion is estimated and the output pixels of output frames 3 are interpolated in the time interval separating two output frames.

Using a vector projection (extrapolation), assuming therefore that the motion estimated between two frames continues to the next frame, gives impaired image quality in particular when the motions are not uniform, except for the jerkiness phenomenon.

Processes based on an interpolation of motion calculated between for example two non-successive frames also exist but then require more than one frame memory and hence entail a high constructional expense.

The purpose of the invention is to overcome the aforesaid drawbacks.

It relates to a process for interpolating frames of digital video data received in the form of frames at the frame frequency in film mode or in normal mode, including a frame storage, a motion estimation and an interpolation between the stored frame and a current frame, characterized in that in film mode storage is carried out at half the frequency of that in camera mode in such a way that only the second of the two input frames corresponding to the same film image is stored in the frame memory so as to be re-read twice in succession so as to be compared with the next two input frames so as to calculate the motion vectors.

The invention will be better understood with the aid of the following figures which represent:

- Figure 1, the alterations in a pixel belonging to an object in vertical uniform rectilinear motion, this pixel originating from an image in film mode and exhibiting the jerkiness phenomenon;
- Figure 2, the alterations in the same pixel on output from a jerkiness reduction device according to the prior art;
- Figure 3, a motion interpolation and estimation device allowing reduction of jerkiness and implementing the process according to the invention;
- Figure 4, a timing chart from the signals output by the various modules of the device according to the invention;
- Figure 5, the alterations in a pixel at the output of the device according to the invention;
- Figure 6, two modes of filtering for carrying out interpolation.

By virtue of the invention, the constructional expense is reduced, limiting the requirements for frame memory and delay lines. By utilizing a single frame memory it is possible to calculate frames intermediate between two frames of the same image in film mode by interpolation.

The calculated field of motion vectors is of better quality, no extrapolation being required. The motion displayed is thereby improved, limiting the block effects and giving motion vectors of better quality, thereby contributing to the suppression of the jerking effect.

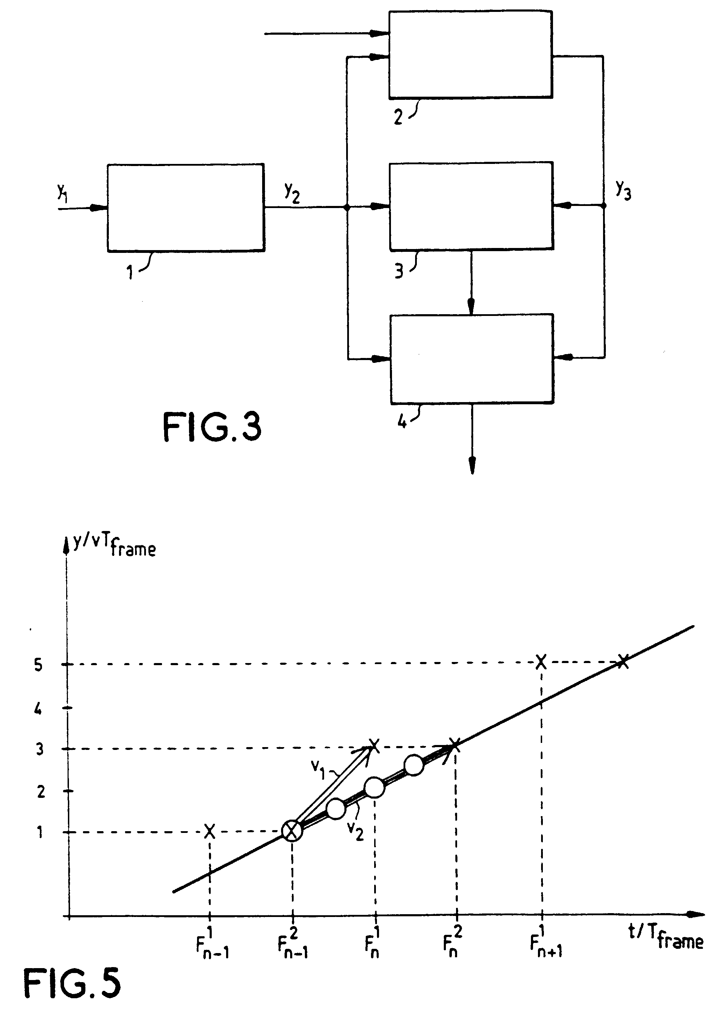

Figure 3 represents a device according to the invention.

The input of the device is the input of a double output frequency memory 1 termed an acceleration memory and more commonly known as a "speed-up memory". The output of the memory 1 is linked in parallel to the input of a frame memory 2, to the input of a motion estimator 3 and to the input of an interpolator 4. The output of the frame memory 2 is linked to a second input of the motion estimator and to a second input of the interpolator. The motion estimator transmits the motion vectors to the interpolator via a link. The output of the interpolator 4 is the output of the device. The frame memory 2 also possesses a control input which receives a signal corresponding to the mode, film or camera, of the images input to the device.

The digital signals received at the input of this speed-up memory are in film mode, that is to say progressively scanned at the image frequency of 25 Hz.

These signals are, as explained earlier, transposed to the frequency 50 Hz in interlaced mode before being transmitted to the input of the device.

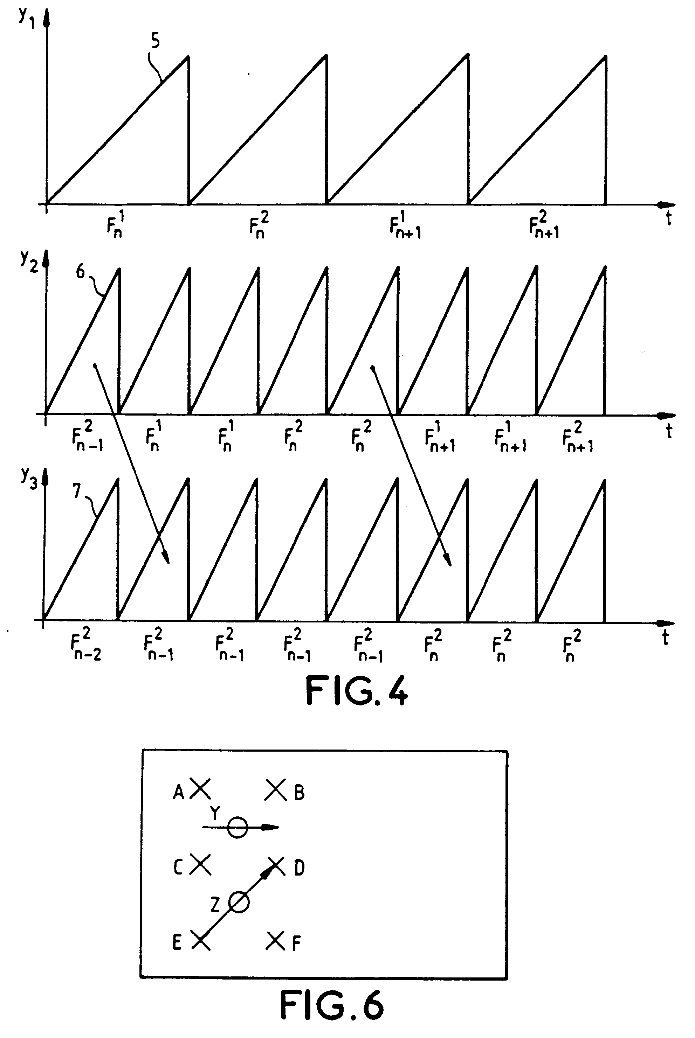

The operation of the device will be better understood with the aid of the curves of Figure 4 which represent three markers with the line scan y as ordinate and the time t as abscissa.

$F_n^1$ and $F_n^2$ are the odd and even frames corresponding to image n. Referring to Figure 2, the labels $F_n^1$ or $F_n^2$ are cycles 1 or 3 of image n. In film mode, the two frames belonging to the same image, for example $F_n^1$ and $F_n^2$ in fact correspond to the same image.

Curve 5 corresponds to the signals $y_1$ input to the speed-up memory, curve 6 to the signals $y_2$ output by this memory and curve 7 to the signals $y_3$ output by the frame memory 2.

The role of the speed-up memory is to output, at a double frequency, the frame stored at input, a first time during storage of the second half of the frame, and a second time during storage of the first half of the next frame.

Hereafter, the period or frequency of the output frames from the speed-up memory will be called the period or frame frequency.

The frame memory 2 stores, among the data originating from the double output frequency memory, those corresponding to the second split frame of the even frames only, that is to say the second of the frames $F_{n-1}^2$, $F_n^2$, etc. The frame memory transmits on its output the stored frame after storage thereof and repeats it four times before passing to the next frame as shown by the curve 7. The role of this memory is therefore to select frames from those leaving the speed-up memory and to delay these selected frames by the duration of from one frame to four frames, presenting them four times in succession on its output, at the frame frequency. The motion estimator 3 compares the frames received on each of its inputs so as to determine the field of motion vectors. Comparing curves 6 and 7 corresponding to the signals present on each of the inputs of the motion estimator, it is observed that the motion taken into account for the calculation is that between the even frame of image n and the odd frame of the next image n+1 over two frame periods and then between the even frame of image n and the even frame of image n+1 over the following two frame periods. The two frames compared correspond, in film mode, to two different instants since they are always different image frames.

The operation of the motion estimator and of the interpolator are specified herebelow.

The circuits must be capable of handling both the case in which the frames available on their inputs are of like parity and the case in which they are of opposite parity. Thus, the motion estimator carries out vertical filtering of the frames at input allowing calculation of motion vectors whether the frames compared are of like parity or of opposite parity.

During a first frame period corresponding to the first presentation of frames as input to the motion estimator, a first estimate of the motion vectors is made by carrying out for example a matching of main blocks into which the image is partitioned (MB for "main blocks"), by correlation, a process which is more commonly known as "block matching". During the "second pass" (the same frames are presented in a second frame period), a refinement of this calculation is performed by calculating the motion vectors of sub-blocks (SB for "sub-blocks") making up the main blocks. This method of calculation in two steps (or 2 cycles) makes it possible to limit the number of delay lines required for these calculations: thus, since the calculation of an SB vector requires that the closest neighbouring MB vectors be known, during calculation of the SBs in the cycle following the cycle for calculating the MBs, the introduction of additional delay lines is avoided; on the other hand, however, the SB vectors are not available until the next cycle. This last point is not problematic since no motion-compensated interpolation is required during the cycle in which only the MB vectors are available.

The table below represents the various phases of calculating the motion estimator when handling images in film mode and in camera mode.

Film mode:

| $Y_1$ | $F_n^1$ | | $F_n^2$ | | $F_{n+1}^1$ | | $F_{n+1}^2$ |
|---|---|---|---|---|---|---|---|
| $Y_2$ | $F_{n-1}^2$ | $F_n^1$ | $F_n^1$ | $F_n^2$ | $F_n^2$ | $F_{n+1}^1$ | $F_{n-1}^1$ |
| $Y_3$ | $F_{n-2}^2$ | $F_{n-1}^2$ | $F_{n-1}^2$ | $F_{n-1}^2$ | $F_{n-1}^2$ | $F_n^2$ | $F_n^2$ |
| motion estimation | SB | MB | SB | SB | SB | MB | SB |
| interpolation | $F_{n-2}^2 + F_{n-1}^2$ | $F_{n-1}^2 + F_n^1$ | $F_{n-1}^2 + F_n^1$ | $F_{n-1}^2 + F_n^2$ | $F_{n-1}^2 + F_n^2$ | $F_n^2 + F_{n+1}^1$ | $F_n^2 + F_{n+1}^1$ |
| coefficient | 3/4 | 0 | 1/4 | 1/2 | 3/4 | 0 | 1/4 |
| output | $C_{n-1}^4$ | $C_n^1$ | $C_n^2$ | $C_n^3$ | $C_n^4$ | $C_{n+1}^1$ | $C_{n+1}^2$ |

The outputs at doubled frequency are labelled $C_n^1$ to indicate that this relates to cycle number i of image n. The outputs $C_n^1$ and $C_n^3$ thus correspond to the inputs $F_n^1$ and $F_n^2$.

The motion estimator calculates the field of motion vectors for the main blocks for example, for $C_n^1$, from frames $F_n^1$ and $F_{n-1}^2$.

The signals of frames $Y_2$ and $Y_3$ are those from which the motion vectors are calculated and the output frames interpolated, using the appropriate coefficients.

In the next cycle $C_n^2$, the frames presented to the two inputs of the motion estimator are again $F_n^1$ and $F_{n-1}^2$. This second cycle will thus enable the motion estimator to refine the calculation of the motion vectors by acting on the sub-blocks. During the third and fourth cycle corresponding to the outputs $C_n^3$ and $C_n^4$, the frames present are $F_n^2$ and $F_{n-1}^2$. Calculation of the motion vectors is also performed at sub-block level, the motion vectors calculated for the main blocks MB during the first cycle being utilized here since they are still valid. Thus, only the frame changes between the first and the succeeding cycles, comparison always being made between image n-1 and n in respect of the calculation of these vectors and it is known that in film mode, the even and odd frames correspond to the same image, that is to say to the same instant of the source image. The calculation is repeated for the fourth cycle since this avoids storage of the previous vector field and hence exhaustion of the memory.

Camera mode:

| | | | | | | | | |
|---|---|---|---|---|---|---|---|---|
| $Y_1$ | | $F_n^1$ | | $F_n^2$ | | $F_{n+1}^1$ | | $F_{n+1}^2$ |
| $Y_2$ | $F_{n-1}^2$ | $F_{n-1}^2$ | $F_n^1$ | $F_n^1$ | $F_n^2$ | $F_n^2$ | $F_{n+1}^1$ | $F_{n+1}^1$ |
| $Y_3$ | $F_{n-2}^2$ | $F_{n-2}^2$ | $F_{n-1}^2$ | $F_{n-1}^2$ | $F_n^1$ | $F_n^1$ | $F_n^2$ | $F_n^2$ |
| motion estimation | MB | SB | MB | SB | MB | SB | MB | SB |
| interpolation | $F_{n-2}^2 + F_{n-1}^2$ | $F_{n-2}^2 + F_{n-1}^2$ | $F_{n-1}^2 + F_n^1$ | $F_{n-1}^2 + F_n^1$ | $F_n^1 + F_n^2$ | $F_n^1 + F_n^2$ | $F_n^2 + F_{n+1}^1$ | $F_n^2 + F_{n+1}^1$ |
| coefficient | 0 | 1/2 | 0 | 1/2 | 0 | 1/2 | 0 | 1/2 |
| output | $C_{n-1}^3$ | $C_{n-1}^4$ | $C_n^1$ | $C_n^2$ | $C_n^3$ | $C_n^4$ | $C_{n+1}^1$ | $C_{n+1}^2$ |

In camera mode, two frames $F_n^1$ and $F_n^2$ of the same image correspond to two different instants of the source image. Thus, during the first cycle corresponding to $C_n^1$, a calculation of the motion vectors is carried out over the main macroblocks MB on the basis of the frames $F_{n-1}^2$ and $F_n^1$ and during the second cycle over the sub-blocks for these same frames. For the third cycle, the frames present are $F_n^1$ and $F_n^2$ from which may therefore be calculated the new motion vectors over the blocks MB, the fourth cycle allowing refinement over the sub-blocks.

The difference between the two modes relates to the frame memory. A signal corresponding to the mode involved is sent to a control input of the frame memory, this input permitting or denying storage of the frame presented on its input.

In curve 7 of Figure 4 it may be seen that the signal $y_2$ available at the input of the frame memory is write-sampled at the rate of every fourth cycle in film mode, for example $F_{n-1}^2$, $F_n^2$, $F_{n+1}^2$, etc. The stored frame is then read four times over four successive cycles (or four successive frame periods). Whilst in camera mode, sampling is at doubled frequency and the stored frame is therefore repeated over two successive cycles.

The motion vector field calculated for a given frame is transmitted to the interpolator 4. This performs an interpolation as a function of the frame received on its first input and that received on its second input.

The coefficients applied to the motion vectors are 0 and $\frac{1}{2}$ in normal mode.

In film mode, Figure 5 provides a better understanding of the values chosen. A motion vector V1 is calculated between frame $F_{n-1}^2$ and $F_n^1$ so as to yield the pixel of the intermediate frame a distance $\frac{1}{4}$ x V1 from the pixel of the first frame and a motion vector V2 is calculated between frame $F_{n-1}^2$ and $F_n^2$ to yield a pixel of the intermediate frame a distance $\frac{3}{4}$ x V2 from the pixel of the first frame. Frames $F_n^1$ and $F_n^2$ correspond to the same film image and the vectors V1 and V2 are therefore identical, this being why the calculations are performed over the sub-blocks during the third and fourth cycles, while taking into account the motion vectors calculated over the macroblocks during the first cycle. The jerking effect, as shown by the alignment of the pixels represented by circles (output pixels), is suppressed.

A conventional interpolation filter operates with two frames of opposite parities. It is possible to come down to the use of such a filter by vertical averaging over one of the two input frames. Filtering by averaging one of the two input frames makes it possible to generate a field of opposite parity. The interpolation filtering can then be carried out in a conventional manner whilst averaging over three pixels, namely two pixels one beneath the other of a frame and that on the intermediate line of the following reconstructed frame of opposite parity.

This solution may however entail a loss of resolution in the vertical direction. Another solution consists in carrying out filtering on the basis of two even frames input to the interpolator so as to obtain an odd frame. Filtering is for example carried out over four pixels or two pixels, using a linear/median filter or simply a linear filter.

An example is given in Figure 6 which represents the output pixels (circles) obtained from such filterings of the input pixels (crosses).

The choice of filtering depends both on the motion vector allocated to the pixel of the intermediate frame and on the parity of the line on which the pixel to be interpolated lies.

The output pixel Y which has a zero motion vector can be generated from the values (luminances) of the input pixels A, C of a frame and the input pixels B, D of the other frame of like parity with a linear/median hybrid filter.

$$Y = \mathrm{MEDIAN}\left(\frac{(A+B)}{2}, \mathrm{MEDIAN}(A, B, C, D), \frac{(C+D)}{2}\right).$$

The median operator with an odd number of variables eliminates the extreme values and selects only the central value, the median operator with an even number of variables selects the two central values and calculates their mean value.

The output pixel Z whose motion vector is +2 can be generated from the pixels E of one frame and D of the other frame of like parity, shifted by one line with a simple linear filter.

$$Z = \frac{(E+D)}{2}$$

The invention is not limited to the examples described and may very well be applied to any type of frame scan converter requiring interpolation. In particular, depending on the ratio between the input frame frequency and the output frame frequency, it is not essential to employ a "speed-up" type memory in order to implement the invention.

**Claims**

1. Process for interpolating frames of digital video data received in the form of frames at the frame frequency in film mode or in normal mode, including a frame storage, a motion estimation yielding motion vectors and an interpolation between the stored frame and a current frame, characterized in that in film mode storage is carried out at half the frequency of that in camera mode in such a way that only the second of the two input frames corresponding to the same film image is stored in the frame memory so as to be re-read twice in succession so as to be compared with the next two input frames so as to calculate the motion vectors.

2. Process for converting the frame frequency of digital video data including a frame storage, a motion estimation yielding motion vectors and an interpolation between the stored frame and a current frame according to Claim 1, characterized in that the current frame is stored a first time so as to be read twice in succession at double the frequency of the input frame frequency so as to yield $y_2$, in that $y_2$ is stored every second frame in normal mode and every fourth frame in film mode, each time the last of these frames, so as subsequently to be read at double the frequency of the input frame frequency so as to yield $y_3$, and in that the motion estimation and the interpolation are carried out between frames $y_2$ and $y_3$ read at double the frequency of the input frame frequency.

3. Process according to Claim 1 or 2, characterized in that, the interpolation undertakes beforehand, when the two frames received are of like parity, a pre-filtering by vertical averaging of one of the two frames $y_2$ so as to yield a frame of opposite parity to $y_3$.

4. Process according to Claim 1 or 2, characterized in that the interpolation undertakes, when the two frames received are of like parity, a linear/median filtering on four pixels matched up by the motion vector of the pixel to be interpolated, the first two pixels belonging to two consecutive lines and the other two to the corresponding consecutive lines in the other frame, the horizontal and vertical positions of these pixels being defined by the position of the pixel to be interpolated and by the motion vector allocated to this pixel.

5. Process according to Claim 1 or 2, characterized in that the interpolation undertakes when the two frames received are of like parity a linear filtering on two pixels matched up by the motion vector of the pixel to be interpolated, a pixel from one frame and the corresponding pixel from the other frame, the horizontal and vertical positions of these pixels being defined by the position of the pixel to be interpolated and by the motion vector allocated to this pixel.

6. Process according to Claim 4 or 5, characterized in that the choice of filtering is dependent both on the motion vector allocated to the pixel of the interpolated frame and to the parity of the line to which this pixel belongs.

7. Device for interpolating a frame of digital video data received in the form of frames in film mode or in normal mode including a frame memory (2) receiving digital video data, a motion estimator (3) and an interpolator (4) each having two inputs, their first inputs receiving the same digital video data as the input of the frame memory, their second inputs receiving the output from the frame memory, characterized in that the digital video data pass beforehand through a "speed-up" type memory (1) yielding the video data at output at doubled frequency by repeating the frames twice, in that the frame memory writes every second frame and then reads this frame twice at double the frequency of the input frame frequency in camera mode and writes every fourth frame and then reads this same frame four times at double the frequency of the frame frequency in film mode, the frame stored by the frame memory being each time the second of the two frames arising from the same image.

FIG.1

PRIOR ART

FIG.2

PRIOR ART

# FIG.3

# FIG.5

FIG. 4

FIG. 6

**European Patent Office**

## EUROPEAN SEARCH REPORT

Application Number

EP 97 40 1460

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| E | EP 0 781 041 A (THOMSON MULTIMEDIA SA) 25 June 1997<br>* page 7, line 43 - line 58 *<br>* page 28, line 37 - page 29, line 15 *<br>--- | 1,2,7 | H04N5/44 |
| X | HAAN DE G ET AL: "AN EVOLUTIONARY ARCHITECTURE FOR MOTION-COMPENSATED 100 HZ TELEVISION"<br>IEEE TRANSACTIONS ON CIRCUITS AND SYSTEMS FOR VIDEO TECHNOLOGY,<br>vol. 5, no. 3, 1 June 1995,<br>pages 207-217, XP000517124<br>* page 208, column 1, line 9 - page 214, column 2, line 11 *<br>--- | 1,2,4,7 | |
| X | EP 0 574 068 A (PHILIPS ELECTRONICS NV) 15 December 1993 | 1,2,7 | |
| Y | * column 3, line 37 - column 8 *<br>--- | 4 | |
| Y | EP 0 577 165 A (PHILIPS ELECTRONICS NV) 5 January 1994<br>* column 2, line 34 - column 3, line 19 *<br>----- | 4 | TECHNICAL FIELDS SEARCHED (Int.Cl.6)<br><br>H04N |

The present search report has been drawn up for all claims

| Place of search | Date of completion of the search | Examiner |
|---|---|---|
| BERLIN | 15 October 1997 | Materne, A |